# EUROPEAN PATENT APPLICATION

(11) **EP 2 393 056 A1**
(43) Date of publication of application: **07.12.2011**
(21) Application number: 10005743.9
(22) Date of filing: 02.06.2010
(51) Int. Cl.: G06Q 30/00

(54) **Acquiring, ranking and displaying points of interest for use in an augmented reality service provisioning system and graphical user interface for displaying such ranked points of interests**

(71) Applicant: Layar B.V., 1019DW Amsterdam (NL)
(72) Inventor: Groten, Dirk, 1019 DW Amsterdam (NL); Maës, Anthony Martin Yann, 1019 DW Amsterdam (NL); Davidson, Cari Serene, 1019 DW Amsterdam (NL)
(74) Representative: Visscher, Erik Henk

(57) **Abstract**

Methods for acquiring, generating and displaying ranked points of interests for use in an augmented reality service provisioning system are described. The method for generating such ranked points of interest comprises: receiving feedback information comprising information on users interactions associated with one or more points of interest displayed as selectable graphical indicators on a screen of a mobile device and assigning popularity scores to points of interests identified in said feedback information on the basis of said user interactions; associating a point of interest in a recording list, comprising points of interests sent to one or more mobile devices in said augmented reality service provisioning system, with a popularity score assigned to points of interests identified in said feedback information; and, storing said point of interest and said popularity score in a points of interest database.

## Description

### Field of the invention

The invention generally relates to acquiring, ranking and displaying points of interests for use in an augmented reality service provisioning system and a graphical user interface for displaying such ranked points of interest and, in particular, though not necessarily, to a method and a system for generating ranked points of interests for use in an augmented reality service provisioning system, a client and a server for use in such system, and a computer product program using such method.

### Background of the invention

The recent convergence of mobile telecommunications, imaging systems and multimedia techniques enable the realisation of mobile services wherein real-world scenery seen by a user is enhanced with computer-generated imagery. These services, which are generally referred to as augmented reality (AR) services, are currently implemented on mobile multimedia devices.

Typically such services involve retrieval of digital data from a network server on the basis of the geographical location of the mobile device on which an AR client is executed. The digital data may be displayed to the user in the form of a graphical layer overlaying the real-world scenery seen by the user on a graphical user interface (GUI). Known GUI implementations include a screen of a mobile device, which displays a graphical layer over the scenery of a screen shot generated by a digital camera of the mobile device, or a head mounted display.

The graphical layer may include visual information indicators associated with real-world objects and locations in the scenery. Such an indicator, which hereafter is generally referred to as a Point Of Interests (POI), may include graphical information and/or selectable links allowing a user to access further sources, e.g. web pages, audio and media files, etc.

Currently, the first systems hosting such mobile AR services are set up and rapidly grow in popularity. One key feature for rapid adoption by users is the use of an open architecture. For example the Layar® AR platform uses a standardized public layer definition allowing third party content providers to design their own layers each comprising a particular set of POIs and add this layer to the existing pool of layers which is managed by a layer proxy. Using a layer database comprising URLs of the content providers and layer metadata, the layer proxy enables an AR client to retrieve POIs associated with a user-selected layer.

In order to maintain an open and manageable AR system, the layer metadata typically comprise global information on a layer and no detailed information on the POIs associated with the layer. The layer database thus does not contain sufficient information for enabling a user to search for relevant POIs, which are available within a certain range around the user. Hence, with the rapid increase of the number of layers and associated POIs, it is desirable for a user to be able to search for "local" POIs, i.e. relevant POIs within a particular range around the location of the user. POIs however are not linked documents such as HTML pages so that schemes for ranking search results known from the Internet (e.g. PageRank used by the Google search engine) cannot be used. Hence, news way for searching and ranking POIs according to their relevance are needed.

Using a suitable scheme for searching POI, the number of relevant POIs in a search result within a predetermined range of the user may become very large and spatial visualisation of the search results on a mobile screen is of limited size may become problematic. In particular, POIs may be located close together so that the displayed POI are cluttered together on the screen. Especially when a mobile device uses a display screen with touchscreen functionality, selection of a POI from a large group of POIs may become very difficult.

Hence, there is a need in the art for methods and systems allowing ranking and searching points of interest for use in an augmented reality service provisioning. Moreover, there is a need in the art for controlling user interface operation of a mobile device displaying such ranked and searched POIs such that a POI user interaction is achieved which allows a user to select and examine the POI search results in a simple and intuitive way.

### Summary of the invention

It is an object of the invention to reduce or eliminate at least one of the drawbacks known service provisioning systems. In a first aspect the invention may relate to a method for generating ranked points of interests for use in an augmented reality service provisioning system. The method may comprise the steps of: receiving feedback information comprising information on users interactions associated with one or more points of interest displayed as selectable graphical indicators on a screen of a mobile device and assigning popularity scores to points of interests identified in said feedback information on the basis of said user interactions; associating a point of interest in a recording list, comprising points of interests sent to one or more mobile devices in said augmented reality service provisioning system, with a popularity score assigned to points of interests identified in said feedback information; and, storing said point of interest and said popularity score in a points of interest database.

In one embodiment, said method may further comprise: associating said points of interest in said recording list with distance interaction information comprised in said feedback information, said distance interaction information determining the distance between a mobile device and the point of interest at the moment of a user interaction; and storing said distance interaction information associated with said point of interest in said points of interest database.

In another embodiment a points of interest may be associated with a data structure comprising at least a unique identifier, location information and metadata for allowing a mobile device to display a point of interest as selectable graphical indicators on a graphical user interface.

In yet another embodiment said method may comprise: storing one or more points of interest identified in said feedback information and their associated popularity in a popularity table; determining on the basis of the points of interest and the popularity scores in said popularity table, the popularity score of a point of interest in said recording list.

In a further embodiment said feedback list is generated by storing events associated with a user interacting with a point of interest displayed on a screen of a mobile device.

In one variant said popularity score may be determined on the basis of a popularity algorithm using user interaction information as an input parameter.

In another variant said method further may further comprise: receiving a request from a mobile device for points of interests associated with a predetermined graphical overlay; on the basis of a resource database, relaying said request to a server comprising said points of interests; receiving one or more points of interest associated with said graphical overlay; relaying said points of interests to said mobile a points of interest recorder for storing said points of interest in said recording list.

In yet another variant said method may further comprise indexing the information in the points of interest database using an indexing scheme.

In another aspect the invention may relate to a method for searching in an indexed list of points of interests, wherein each point of interest is at least associated with location information and ranking information, said ranking information comprising at least a popularity score determined on the basis of information on user interactions associated with one or more points of interest displayed as selectable graphical indicators on a screen of a mobile device. The method may comprise: receiving a search request from a mobile device, said request at least comprising location information associated with said mobile device; selecting points of interest in said indexed list on the basis of said location information; ranking said selected points of interest on the basis of said ranking information; sending said ranked points of interest to said mobile device.

In one embodiment said ranking information may further comprise an average distance interaction of a point of interest, the distance between a point of interest and/or the location information in said search request.

In yet another embodiment the method may comprise if said mobile device has moved over a predetermined distance, sending a subsequent search request for retrieving a list of ranked points of interests on the basis of the new location information of said mobile device.

In further aspect the invention may relate to a ranking system for generating ranked points of interests for use in an augmented reality service provisioning system, said points of interests allowing a mobile device to display selectable graphical indicators on a graphical user interface, wherein the system may comprise: a feedback recorder for receiving feedback information generated by a feedback function executed on a mobile device, said feedback information comprising information on users interactions associated with one or more points of interest displayed as selectable graphical indicators on a screen of a mobile device; a points of interest recorder for generating recoding list comprising points of interests which are sent to sent to one or more mobile devices in said augmented reality service provisioning system; a processor executing a popularity algorithm for assigning popularity scores to points of interests identified in said feedback information on the basis of said user interactions; and, a processor for associating points of interest in said recording list with a popularity score assigned to points of interests identified in said feedback information.

In yet another aspect the invention may relate to a client for use with a ranking system as described above, wherein said client may be configured to: send a request for points of interest to a content server in a network; to receive from said content server one or more points of interest and to display said points of interests as location-dependent selectable graphical indicators in a graphical overlay on the graphical user interface of a mobile device; to generate a feedback information of user interactions associated with one or more points of interests displayed on said graphical user interface of said mobile device; and, to send said feedback information, preferably periodically, to said ranking system.

In a further aspect the invention may relate to a graphical user interface for displaying search results comprising ranked points of interests on a mobile device comprising a digital compass, wherein said graphical user interface may comprise: a first window for displaying a scrollable list of selectable items, each item being associated with a ranked point of interest and identified by a predetermined graphical indicator, the size of said first window allowing displaying of a predetermined part of said of list of items; a second window for displaying a linear movable compass scale and a first set of graphical elements representing a point of interest associated with displayed items in said first window and each graphical element being presented along said compass scale in accordance with the direction of said points of interest relative to the mobile device; said second window further comprising: a fixed direction pointer wherein if the mobile device is pointed in a certain direction, the linear compass scale and the graphical elements are moved by a signal of the digital compass in the mobile device such that when the fixed direction pointer coincides with a graphical element, the mobile device is pointing towards the location of the point of interest associated with said graphical element.

The invention may also relate to a computer program product, wherein the computer program product may comprise software code portions configured for, when run a computer, executing the method steps according to any of the methods described above.

The invention will be further be illustrated with reference to the attached drawings, which schematically show embodiments according to the invention. It will be understood that the invention is not in any way restricted to these specific embodiments.

### Brief description of the drawings

**Fig.1** depicts a schematic of a known AR service provisioning system.
**Fig.2** depicts exemplary GUIs of a known AR service.
**Fig.3** depicts a schematic of an AR service provisioning system according to one embodiment of the invention.
**Fig.4** depicts an exemplary flow diagram of a POI feedback process according to one embodiment of the invention.
**Fig. 5** depicts an exemplary flow diagram of generating a ranked POI database according to one embodiment of the invention.
**Fig.6** depicts an exemplary flow diagram of the execution of a POI search according to one embodiment of the invention.
**Fig.7** depicts an exemplary GUI for displaying POI search results according to one embodiment of the invention.
**Fig.8** depicts an exemplary GUI for displaying POI results according to another embodiment of the invention.
**Fig.9** depicts an exemplary GUI for displaying POI results according to yet another embodiment of the invention.

### Detailed description

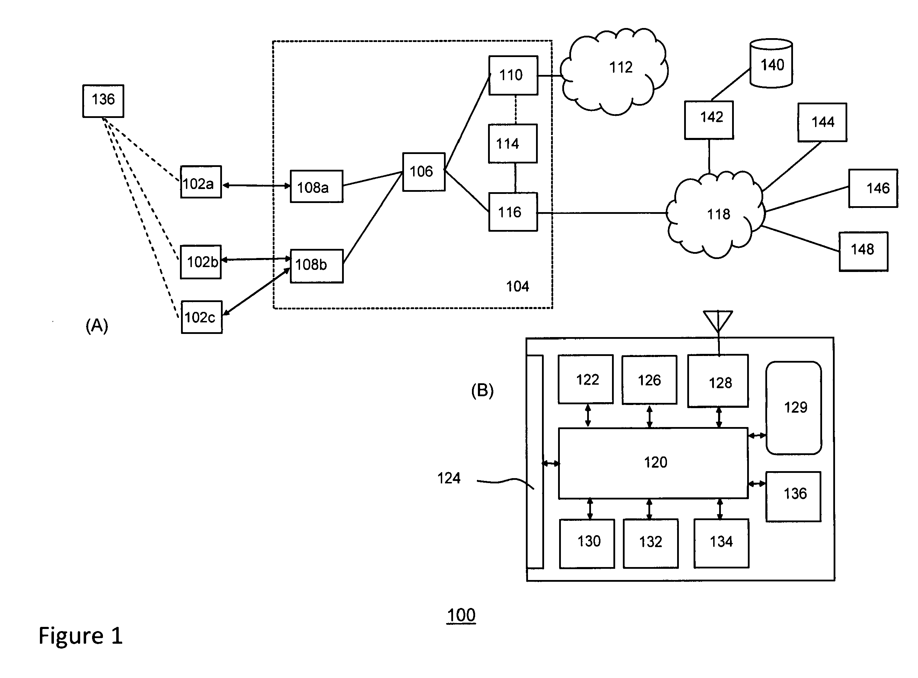

**Fig. 1(a)** depicts a schematic of a known AR service provisioning system **100** for providing mobile AR services. The system comprises one or more mobile user equipment (UEs) **102a-102c** connected to a wireless network **104.** Such wireless networks typically include networks which are implemented in accordance with the 2G, 3G or UMTS-based technologies. A wireless network may include a number of network nodes, e.g. a Base Station Controller **106** (BSC) for controlling a number of access nodes **108,** typically referred to as base stations, each covering a certain area (cell), a Mobile Switching Centre (MSC) **110** for connecting UEs to fixed line telecommunications network **112,** e.g. a PSTN, a Home Location Register (HLR) comprising **114** information associated with subscribers to the mobile services offered by the wireless network and a Serving General Support Node (SGSN) **116** for connecting UEs to one or more public or private data networks **118** such as the Internet. Alternatively and/or in addition UEs may be wirelessly connected to public or private data networks through a local Wi-Fi or WiMax network (not shown).

Each UE, schematically shown in more detail in **Fig. 1(b)**), may generally comprise a processor **120** for executing and managing an Operating System (OS) **122,** a User Interface (UI) including a selectable display **124** and software applications, which may be stored in a memory **126.** The OS may execute client software such as HTTP and/or SIP clients for setting up web-based services and/or streaming services. The UE may comprise a radio card module **128** comprising a base band processor (BP) for controlling the radio communications between the ME and an access node of a wireless network using a RF communications interface. Network access and authentication may be controlled using a SIM card connected to the processor.

The UE may further comprise a digital imaging system **130** comprising a lens system, an image sensor and an imaging processor connected to the GUI which is configured to generate a camera view and sensor modules for generating positional information associated with the UE, i.e. the geo-coordinates and the attitude. Such sensor modules, which are known per se, may include a GPS receiver module **132** for generating the geo-coordinates longitude and latitude of the mobile device, a magnetometer **134** for determining direction (rotation around the vertical axis) and an accelerometer **136** for determining the tilt (the angle with respect to the earth's gravitation vector). In one embodiment, the tilt parameter generated by the accelerometer may be used for determining and displaying the horizontal plane in order to display objects correctly in the camera view.

An AR client stored in the memory of the UE may be activated by the user in order to provide AR services to the UE. In one particular AR service, the AR client may generate on the basis of the location information provided by the GPS module and the digital imaging system, a so-called AR camera view wherein a digitally generated graphical overlay, i.e. a layer comprising geo-coded information in the form of one or more POIs, i.e. indicators, typically graphical indicators, associated with an geo-located object, person, action or location in the camera view. A POI may provide information, e.g. text, e.g. a tweet, images or (3D) virtual objects, or an indication for an action, e.g. selectable links or buttons allowing a user to view further digital sources, e.g. video and/or audio or a webpage, or to execute an application, sending an SMS or starting a call. Further, a POI comprises a geo-location, i.e. geo-coordinates locating it on the Earth's surface (e.g. lat, long) and altitude information (z-coordinate) that may determine a POI to be located on the actual Earth's surface or anywhere above or below this surface.

A layer may be defined according to certain publicly available standard rules, thereby allowing third parties, typically content providers, to define layers associated with different subjects, objects or services, e.g. lifestyle, restaurants, shopping, banks, housing, etc. Hence, a content provider may design its own layer in accordance with the standard rules and submit metadata associated with the layer, i.e. an URL for retrieving the POIs, a layer subject, layer layout information, etc., to the AR system so that it is known from which server the layer data (the actual POIs) may be retrieved.

The AR system thus stores the metadata associated with the available layers in a layer database **140.** If a user selects a particular layer, the AR client transmits request, e.g. a HTTP GET request GetPOI, to a layer proxy **142.** On the basis of the information in the request, the layer proxy may retrieve the URL associated with the selected layer and subsequently relays the request to a server of one of the content providers **144-148.** On the basis of the geo-information in the request, the relevant POIs, including metadata associated with the POIs, e.g. the geo-coordinates of each POI, are determined and returned in a response message to the AR client. The AR client uses the layer metadata in order to generate a graphical overlay including the various POIs and to display the graphical overlay in the camera view.

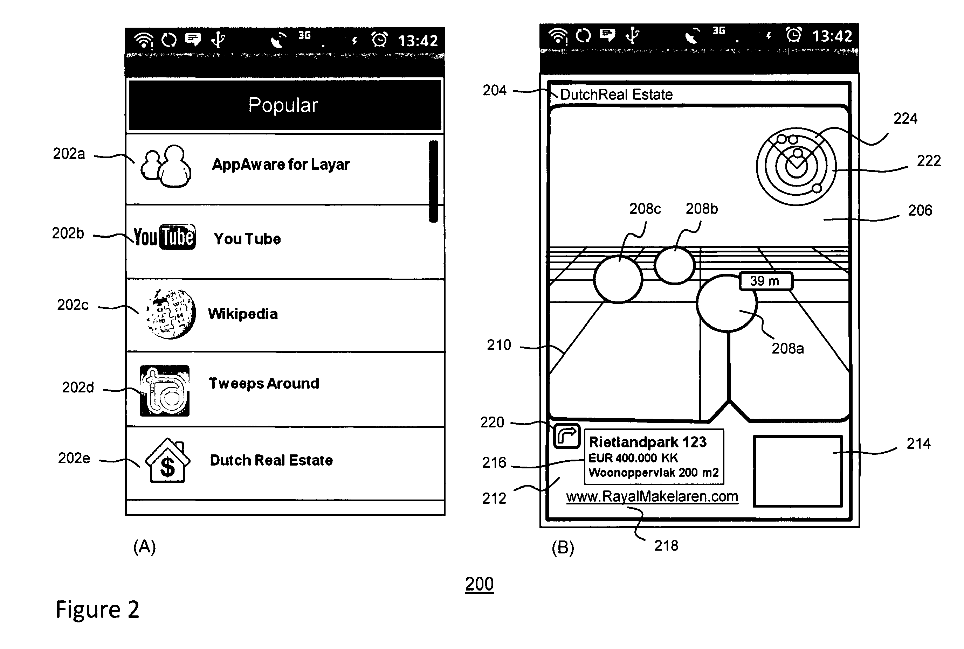

When using the AR service, a user may first select a layer from the layers in a layer gallery view **200** as depicted by the GUI layout in **Fig. 2(a)****.** When using the AR service, the AR client may retrieve layers, e.g. the most frequently selected layers, from the layer database and present the available layers **202a-202e** to the user. Upon selection of a layer by the user, e.g. a real estate layer as depicted in the example of **Fig.2(a)****,** the AR client transmits a request via the layer proxy to a content provider in order to retrieve the POIs associated with the selected layer. Further, the AR client may switch over to the AR camera view mode wherein the user uses the UE as a camera and points the camera towards the POIs of interest.

On the basis of the information in the response, the AR client may generate an AR camera view as depicted in **Fig.2(b)****.** The GUI may comprise a graphical layer **204,** in this example layer of a real estate organisation, superimposed over a real-world window **206** for displaying the scenery to which the user points the camera of the UE. The layer may comprise a number of pals **208a-208c** wherein each POI may be associated with a number of POI elements, e.g. text and picture windows, URLs, a select button for activating a multimedia or messaging service, etc. A POI element may become visible when the user selects a POI or when a user is within a certain distance of the POI. The POIs, e.g. a disc-shaped POI, may be projected onto a 3D grid **210** and may change in size, shape and/or colour as a function of distance and/or time. For example, in **Fig.2(b)** the disc-shaped POIs become smaller in size when the distance between the POI and the AR client gets larger thereby producing a visual depth effect. Further, the AR client may automatically lock onto a POI **208a,** which is at a distance closest to the UE and within the angle of view of the camera. Alternatively, a user may lock onto a POI by selecting it. When locking onto a POI a window **212** may appear comprising further information regarding the POI, including e.g. a picture window **214,** a text window **216,** an URL **218** and/or a selectable link **220.**

The AR camera view is limited by the angle of view of the camera, so not all retrieved POIs, which are within a predetermined distance from the UE, are visible in the AR camera view. For that reasons the GUI may further comprise a small radar screen **222** providing a two-dimensional view of the POIs associated with the selected layer, which are available in the area around the UE. A triangular area **224** in the radar screen depicts the area, which is covered by the AR camera view, and the POIs that are within that area (and thus visible in the AR camera view). For example in **Fig.2(b)** one can determine on the basis of the radar view that three of the four POIs are displayed in the AR camera view.

The GUIs and the associated AR services described with reference to **Fig.2** and **1** are known from the Layar® mobile AR service platform. These figures illustrate that the access to layer information, in particular the access to relevant POIs, is still rather limited. In particular, it illustrates that there is a need for functionality allowing a user to search relevant POIs, which may be associated with different layers and which are available within a predetermined area around the UE. Such POI search function should not negatively influence the open architecture of the platform. Further, such search function should be scalable to large AR systems comprising a large number of different types of POIs.

Moreover, with the steady increase of the number of layers, each comprising an increasing number of POIs, the search results will comprise more and more irrelevant or unwanted POIs. As the AR GUI is using actual real space to represent the POIs, that space may become "filled" in the sense that it may not be possible to represent all POIs at the same time, if they are all located on the same spatial coordinates. Hence, a desired POI search scheme should preferably rank the search results according to a scheme wherein for instance it is presumed that POIs which are frequently selected by users are of a higher relevance than the ones not so often selected. Further, from the GUIs as described with reference to **Fig.2****,** it is apparent that there is a need for a simple and intuitive presentation and manipulation of the search results such that a user may directly associate a ranked POI in the search result with its geo-information and manipulate and access this information such that problems related to selecting a POI from many POIs displayed on a small touchscreen are mitigated.

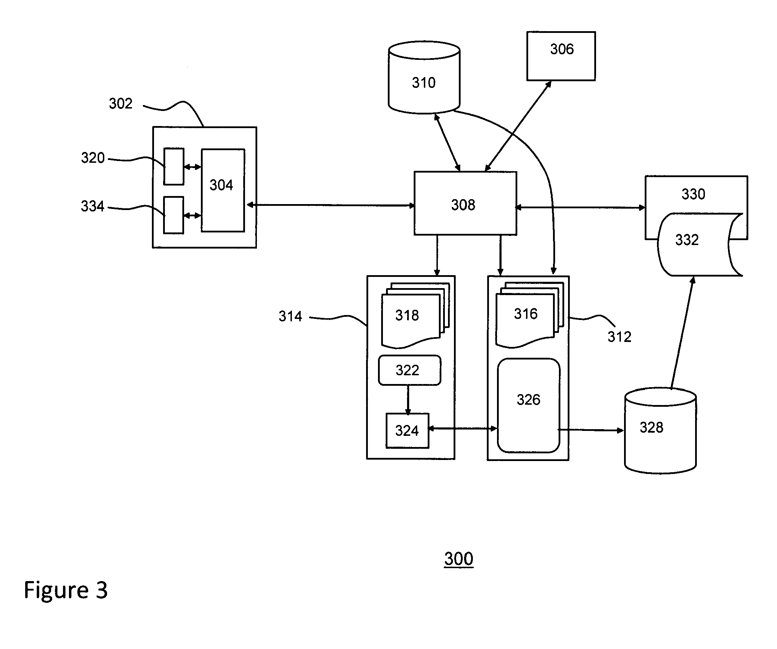

**Fig.3** depicts a schematic of an AR service provisioning system **300** for providing mobile AR services according to one embodiment of the invention. The AR system depicted in **Fig.3** allows a user to search POIs present within a certain distance from the user in accordance to a ranking scheme.

The system comprises one or more mobile devices (user equipment or UE) **302a,302b** which are configured to access fixed public and/or private data networks via a wireless access network (not shown) in a similar was as described with reference to Fig.1**.** Each UE may comprise an AR client **304a,304b** configured to generate an AR camera view on the basis of POI information from content providers **306.** Further, the AR client is configured to receive location and direction information from sensors in the UE. In order to retrieve the relevant POI information, a layer proxy **308** may manage the request and response messages exchanged between an AR client and a server of a content provider on the basis of resource information in a layer database **310.**

The layer database may further comprise a list of URLs associated with the content providers, user information, e.g. in the form of user profiles, and layer information (i.e. layer metadata such as information used to display a layer on the screen of a UE: title, publisher, description text, icons, color schemes; and information used by the AR system: list of countries where the layer is relevant, keywords for searching the layer, location information in the form of bounding geo-boxes to restrict places where layer should be shown, flags for opting out of certain services (e.g. the search service as described in more detail below), average time-to-live of the POIs and expiration date of the layer, etc.).

The AR system may be configured to record POI information that is exchanged between the AR client and the content providers. To that end, the proxy server may comprise (or may be connected to) a POI recorder **312** and a POI feedback recorder **314.** The POI recorder monitors POI responses originating from the content providers and generates on the basis of the monitored POI responses a list of POIs **316,** i.e. a POI queue representing a recorded list of temporally ordered POIs, which were sent by the content providers via the layer proxy to the AR clients. In one embodiment, on the basis of the metadata in the layer database and on the basis of the request parameters, the POI recorder may add contextual information, e.g. layer information and/or user information and/or distance information to each recorded POI. The POI feedback recorder may generate a list of POI events, i.e. a POI feedback queue **318,** representing information regarding the "POI browsing history" of users of the AR system.

In order to correlate POI information recorded by the POI recorder and the POI feedback recorder, each POI in the AR system may be assigned to a unique identifier POI_ID, which may be easily calculated on the basis of the layer metadata and the POI_ID included in the POI response. In one embodiment, the POI_ID may be defined as the hash of a layer identifier, which is unique within the layer database, and a POI identifier, which is unique within a particular layer definition.

The AR client may comprise a POI feedback function **320,** which is configured to monitor and store a group of POI events and to periodically send the thus collected POI event information to the POI feedback recorder. POI events may generally relate to any type of information associated with a user interacting with POIs presented in the AR view of the mobile device. A POI event may include metadata associated with a selected POI, e.g. the POI_ID, and metadata associated with "user actions", e.g. selection of a link associated with the POI, activation of a user selectable program, e.g. a media player or a widget, time information (e.g. time stamps) associated with such user actions and "local" user actions associated with a POI, e.g. selection of a POI as a favourite or tagging the POI with a user-defined tag. A POI event may also include distance information, i.e. at which distance the user interacting with the POI is located from the POI when the interaction occurs.

Using the POI events in the POI feedback queue, a popularity algorithm **322** in the POI recorder may assign popularity points to each POI in the queue. On the basis of the premise that the popularity and relevance of a POI relates to the frequency a POI and its contents are selected and accessed respectively, the popularity algorithm associates popularity points to each POI identified in the feedback queue and subsequently stores the result in a popularity cache **324,** i.e. a fast read/write table. Hence, when using such popularity algorithm, a POI which is frequently selected and which contains frequently accessed contents, will in principle receive a higher popularity score than a less frequently visited POI.

For each POI added or updated in the popularity cache, the feedback recorder may also calculate the average range at which users interact with the POI. Each time a POI event is processed by the feedback recorder containing a distance, it will update the average interaction distance on the POI that is saved in the popularity cache. Hence, each entry in the popularity cache may comprise a POI_ID, a popularity score and the average interaction distance.

The feedback recorder may continuously or periodically update the popularity cache on the basis of the POI events in the POI feedback queue, which is periodically fed by the POI feedback function in the AR client.

In one embodiment, a POI may lose popularity points in time. For example, the popularity score of a POI in the popularity cache that did not or did not receive enough popularity points within a predetermined time may be reduced or alternatively the POI may even be deleted from the popularity cache.

In one embodiment, a content provider may add POI lifetime information to a POI in a GetPOI response. The content provider may also add such lifetime information on the layer metadata level so that it will apply to all POIs within the layer unless overridden in the GetPOI response. In particular, when the information in a POI is only relevant for a short period of time, e.g. a POI associated with a Twitter tweet placed at a certain location by a user of the AR system, or when the information in a POI is highly dynamical, e.g. a POI associated with a player in a game, the POI lifetime information may allow the popularity algorithm to allow the POI to start with a relatively high popularity score but to decrease its score relatively fast if the POI is not accessed often enough.

A POI update function **326** in the POI recorder subsequently may generate on the basis of the POI queue and the information in the popularity cache, a list of POIs for storage in the POI database **328.** The POI update function may be configured to retrieve a POI from the POI queue, to determine on the basis of the POI_ID whether the retrieved POI is listed in the popularity cache and - if so - to request its associated popularity score and the average interaction distance from the popularity cache **324** and to store the POI and the popularity score and average interaction distance in the POI database **328.** If the POI is already listed in the POI database, the popularity score and/or average interaction distance of the POI is updated, otherwise the POI and its score and/or average interaction distance is added to the list. The POI database thus comprises a list of POIs, each identified by a POI_ID and a popularity score reflecting relevancy of the POI as determined by the users of the AR system.

A POI entry in the POI database comprising a POI_ID, the POI metadata (e.g. title, description, type of POI, types of possible interactions), a popularity score, geo-coordinates, the average interaction distance, timestamp relating to the time of update and metadata from the layer database (e.g. keywords, category, etc.), may be indexed by a search engine 330 known per se. When executing a search, the search engine uses the popularity score as a ranking parameter.

In order to avoid collision between the POI updating process executed by the POI recorder and the indexing process, a periodically generated copy of the POI list may be used for generating an indexed file 332 which may be searched on the basis of words, contextual information, popularity score, distance from search query location and average interaction distance.

When executing a POI search on the indexed file, the search engine may use several ranking parameters in order to determine a total ranking score of a POI. This overall ranking score, which the search engine uses for ranking the search results, may be a combination of the following ranking parameters:
- the q-factor search score indicating that if a text string searched for occurs many times it will have a higher score, or if the search query contains more than one word, the q factor will be higher for better matches of words close to each other;
- the distance between the POI and the UE from which the search query was executed (the smaller the distance, the higher the score);
- the popularity (the higher the popularity, the higher the score);
- the average interaction distance of a POI (the larger the interaction distance, the higher the score). The average interaction distance may compensate for the POI and the UE from which the search query was executed as mentioned above. This way POIs that people interact with over a large distance, e.g. like spotting mountain peaks or the like, may still obtain a high score even though it is located at a large distance from the UE);
- time of last update for the POI in the index (the longer in the past, the lower the score).

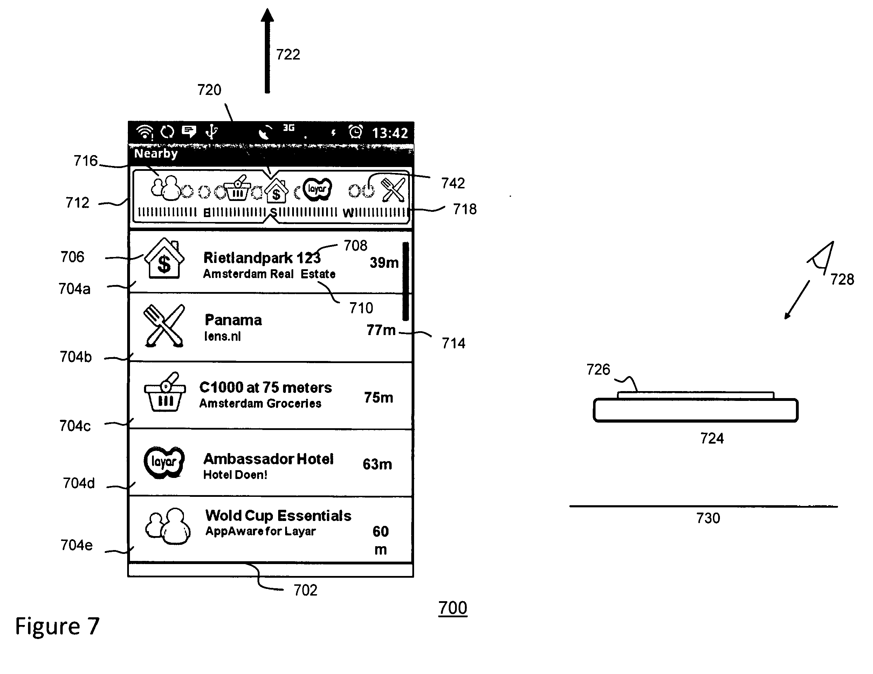

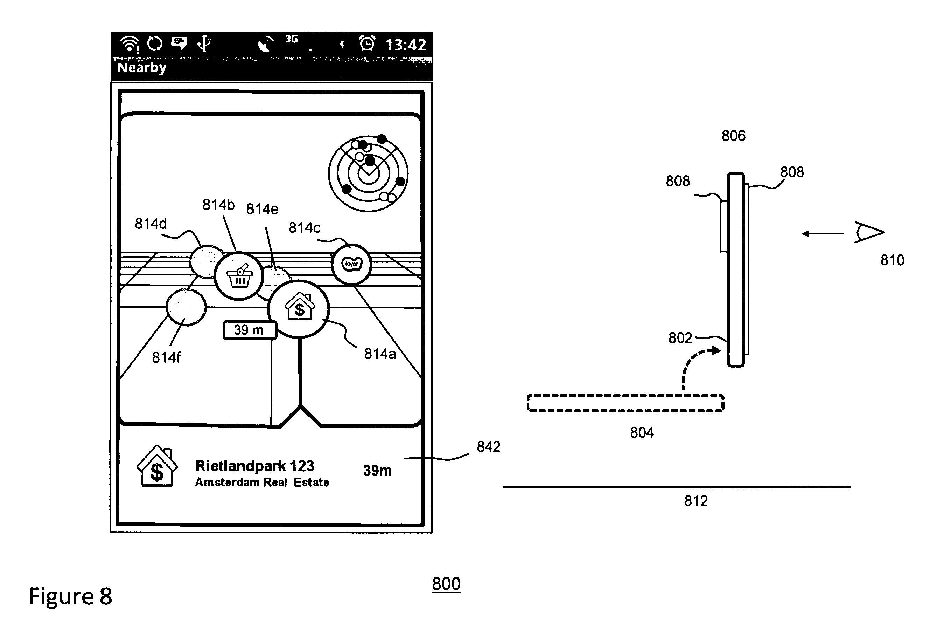

A search application **334** in the AR client may allow the user to input a search query, which is sent in a search request via the layer proxy server to the search engine. In an embodiment, the search query may also be empty, allowing the user just search for any content within a specified distance from the UE. In a further embodiment, the user may restrict the search query with filters, like categories of POIs (only search for POIs belonging to layers within one or more specific categories) or POIs matching a specific tag. On the basis of the search query, filters and geo-information of the user, the search engine may select the "local" POIs, i.e. the POIs, which are within a certain distance from the AR client, and search within this "local" group of POIs on the basis of the query and the ranking parameters as described above. The search results may be subsequently presented to the user in a ranked order as determined on the basis of the overall ranking score of each POI in the search result using a GUI which allows user interaction. Such GUIs and the presentation and the user interaction with the search results will be explained hereunder in more detail with reference to **Fig. 7** and **8****.**

It is appreciated that the invention is not limited to the system as depicted in **Fig.3****.** For example, in one embodiment, instead of one POI feedback queue, the POI feedback recorder may generate several POI feedback queues for the generation of several ranked POI databases. For example, a POI feedback queue may be generated on the basis of POI feedback information generated by a predetermined group of users.

Moreover, the layer proxy, the POI feedback recorder and the POI feedback recorder may be implemented as a single network element, comprising one or more processors for executing code portions a software program product which provides the functionality of the POI ranking and search functionality as described with reference to **Fig.3** and which provides an interface with the one or more content servers comprising one or more layer databases. Alternatively, the layer proxy, the POI feedback recorder and the POI feedback recorder may be implemented as a distributed system comprising various network elements, e.g. servers, and software programs executed thereon.

Hence, from the above it follows that the AR system as depicted in **Fig.3** allows efficient ranking and searching of POIs without degrading the open architecture of the platform. Further, the AR system provides a ranking and search functionality, which is scalable thereby allowing growth in number of layers and POIs without seriously affecting its performance in terms of storage and response time.

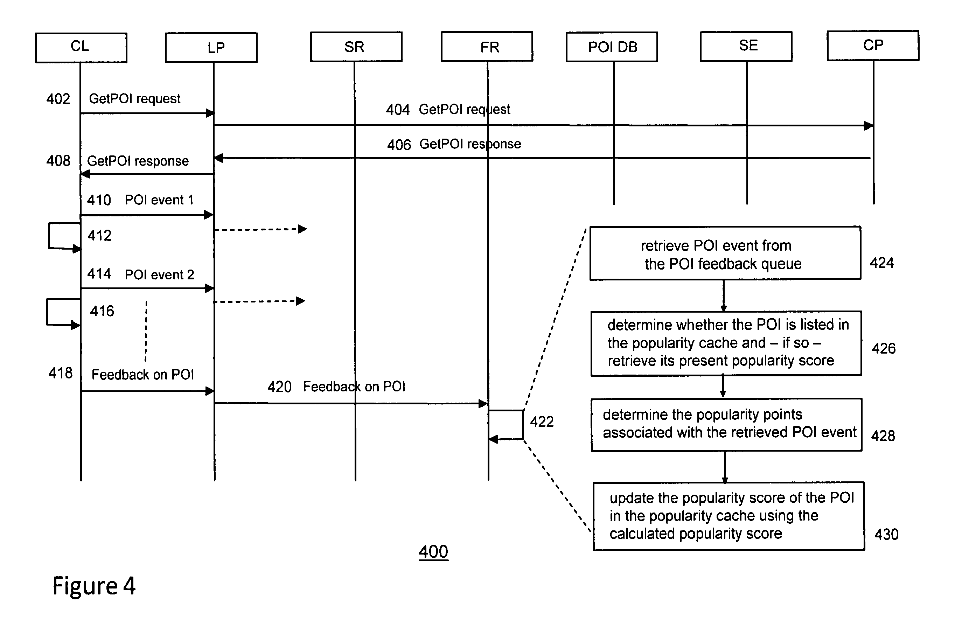

**Fig.4** depicts an exemplary flow diagram **400** of a POI feedback process according to one embodiment of the invention. Typically, the POI feedback process comprises a POI feedback function, which may run as a background program in the AR client, and a POI feedback recorder, which may be hosted on the layer proxy or, alternatively, on a separate server connected to the layer proxy. The POI feedback recorder receives POI feedback event information and processes the POI events using a popularity algorithm.

The POI feedback function may monitor AR client activities such as user interactions with the GUI of the UE, in particular user interactions with POIs associated with a layer displayed in the AR camera view on the screen of the mobile device. Typically, the POI feedback function monitors these POI interactions by examining the protocol messages (e.g. http, ftp, SIP, etc.) and their content, which are sent and received by the AR client.

The process illustrated in **Fig.4** starts with a user selecting a layer. Upon selection, the AR client will request the POIs associated with the layer by sending a GetPOI request to the server of the content provider of the selected layer and receiving the POIs in a GetPOI response from the content provider (steps **402-408**). The AR client subsequently displays the layer and its associated POIs, which are located within a certain range from the UE, on the screen of the UE. Thereafter the user may select one or more POIs from the screen so that an information exchange with the proxy server (step **410**) is triggered. When a message associated with a POI user interaction is identified, it extracts the relevant POI information from the identified message and stores the POI information as a POI event in a memory of the UE (step **412**).

For example, when a user selection of a POI activates the displaying of a graphic box comprising a video activation button and the user subsequently selects the button thereby activating a media player for displaying the video, the POI feedback function may record a first POI event associated with the opening of the POI and second POI event associated with the activation of the video displaying. Each recorded POI event may comprise POI metadata identifying the POI (e.g. the POI_ID), a layer identifier identifying the layer to which the POI belongs, event timing (timestamp), geo-information, e.g. coordinates of the POI and the distance with respect to the AR client and information identifying the type of event, e.g. POI selection or activation of a user selectable service or program e.g. an SMS, an e-mail message, a widget, a game, etc.

The POI feedback function may collect and store a predetermined number of such POI events (step **414,416**) before it sends the POI feedback information in a POI feedback message (step **418**), using e.g. a http POST message, to the layer proxy, which subsequently relays the message to the POI feedback recorder (step **420**). The POI feedback information is stored in a POI event queue, which is processed by a popularity algorithm, which assigns popularity points to a POI on the basis the POI event information and stores the POI and its popularity score in a popularity cache (step **422**).

The processing of POI events involves retrieval of a POI event from the POI feedback queue (step **424**); determine whether the POI is listed in the popularity cache and - if so - retrieve its present popularity score and average interaction distance (step **426**); determine the popularity points associated with the retrieved POI event using the popularity algorithm and the metadata associated with the retrieved POI event and determine the average interaction distance using the distance in the POI feedback information (step **428**); update the popularity score and average interaction distance of the POI in the popularity cache using the calculated popularity score and calculated average interaction distance (step **430**). This process is repeated for each POI event in the POI queue, which is periodically filled with new POI events originating from different AR clients in the AR system.

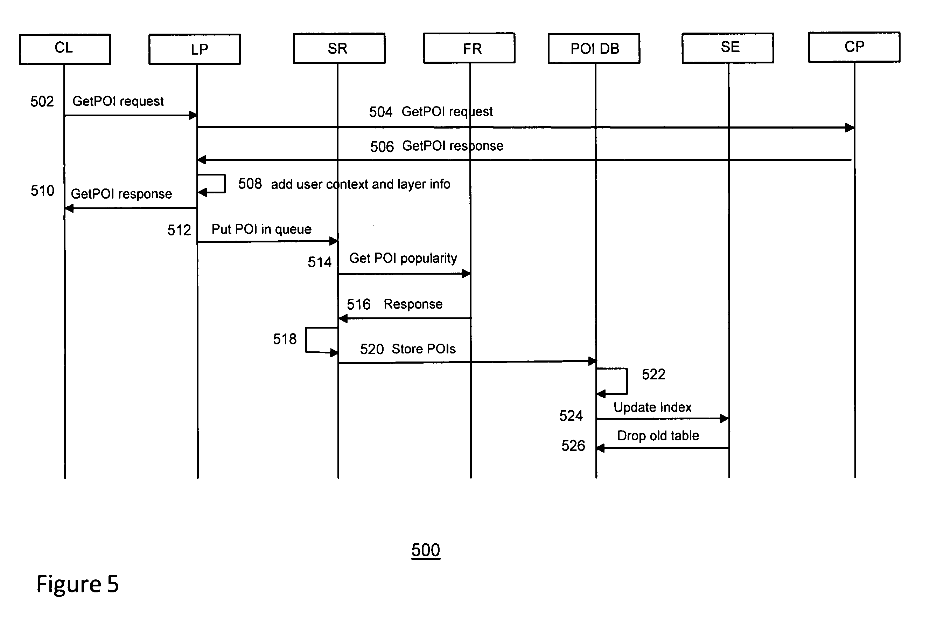

**Fig. 5** depicts an exemplary flow diagram **500** of generating a ranked POI database according to one embodiment of the invention. The process starts with an AR client sending a request for POIs, e.g. a http get GetPOI, associated with a particular layer, to the layer proxy (step **502**), which relays the request on the basis of the metadata in the request to the layer content provider (step **504**). The request may contain at least a layer identifier, geo-information, e.g. coordinates and altitude, on the position of the AR client. Optionally, the request may contain a range parameter for indicating that only POIs within a certain distance from the AR client are requested. It may also contain filter settings pertaining to the layer, e.g. to only request a certain type of POIs for that layer like only Italian restaurants in a restaurant layer or to restrict a value characterizing the POIs being returned like the price range of houses for sale.

In response to the request, the layer content provider may determine the relevant POIs and send these POIs in a GetPOI response back to the layer proxy server (step **506**). Upon reception of the POIs, the layer proxy may retrieve relevant layer information and user data from the layer database and add this information to the GetPOI response (step **508**), which is subsequently sent to the AR client (step **510**). The GetPOI response may at least comprise a list of POIs identified by their POI_IDs and the layer name to which the POIs belongs. Each POI in the GetPOI response further contains metadata such as text (title, description), interactions that a user can have with the POI such as URLs for fetching web pages, videos, audio files and URIs for placing phone calls, sending emails and text messages to instances associated with the POI. An POI in the GetPOI response may also contain data for representing the POI in the AR client, such as images, icons, 3D files and metadata instructing the AR client how to represent the object in space such as rotation angle, size and scaling factor. The proxy further relays the response to the POI recorder, which stores the POIs in the response, in the POI queue (step **512**). Each entry in the POI queue may comprise the POI_ID uniquely identifying the POI in the AR system, the coordinates of the POI, the textual metadata of the POI and characteristics of the POI (is it a 3d object, what type of interactions does it allow) and other metadata (e.g. contextual information) stored in the layer database.

The POI update function subsequently generates a POI list on the basis of the POIs in the POI queue and the POIs in the popularity cache. To that end, the POI update function retrieves a POI entry from the POI queue (step **514**) and determines on the basis of the POI_ID whether the POI is listed in the popularity cache (step **516**). If so, the ranking function retrieves the popularity score and - if the POI is listed in the POI database - the POI in the POI database is updated with respect to its popularity score (step **518**). If the POI is not listed in the POI database, the POI and its popularity score is added to the list (step **520**). In this way, the POI database comprises a constantly up-to-date list of POIs identified by the POI_IDs and assigned popularity points reflecting the popularity and relevancy of the POI as determined by the users of the AR system.

After a predetermined period of time, a copy of the POI list in the POI database is indexed for generating a new indexed POI file (step **522**), which replaces the old indexed POI file (step **524**).

As described in with reference to Fig. 3, each POI entry in the POI database comprises a POI_ID, a popularity score, geo-coordinates, the average interaction distance, timestamp relating to the time of update and metadata from the layer database (e.g. keywords, user-added standardized POI index, etc.). Hence, after indexing the information in the POI database, a search engine may use the popularity score in combination with the other parameters for ranking the searched POIs.

The indexed POI file may be accessed by a search engine for searching relevant POIs on the basis of a search query text, geo-information, distance information, contextual information and popularity score. The process of generating an indexed POI file may be periodically repeated, e.g. every 10-5 minutes or less, such that a POI search is always based on the most recent updated POI list in the POI database. Especially with POIs, which are highly dynamical, e.g. a POI representing a Twitter tweet placed by a certain person on a specific location, fast updates are required in order for the system to generate relevant results, which are usable for a user.

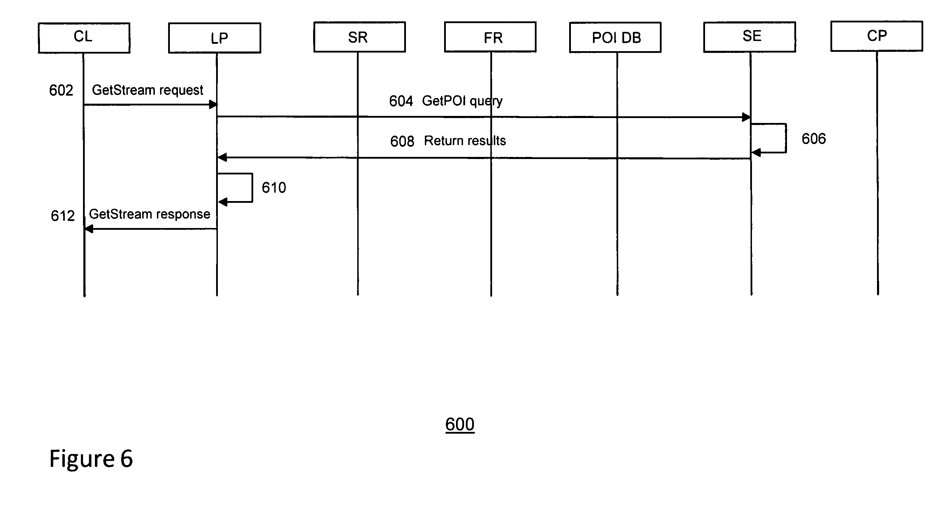

**Fig.6** depicts an exemplary flow diagram **600** of the execution of a POI search according to one embodiment of the invention. When the user decides to perform a POI search, he or she may activate the POI search function in the AR client. The POI search function may allow the user to enter a search query or, alternatively, it may decide to perform a search solely on the basis of the geo-information of the AR client. Furthermore the POI search function may allow the user to select filters in order to restrict the search to specific set of POIs (e.g. only POIs from layers with category `restaurants'). Then the AR client may send a search request, e.g. a http GET GetStreamItems message, comprising the coordinates of the mobile device and, optionally, the search query to the layer proxy or filter parameters (step **602**), which subsequently relays the search request to the search engine (step **604**).

In response, the search engine may execute a POI search in the indexed POI list using the coordinates and the optional query and optional filters as parameters (step **606**) and generate a list of "local" POIs each being identified by a POI_ID, layer name and geo-coordinates, which are within a predetermined range of the AR client. The POIs may be ranked in accordance to the ranking parameters as described with reference to Fig. 3. These ranked results may be subsequently returned in a GetStreamItems response to the layer proxy (step **608**), which may optionally further filter the results and/or add further layer information and/or user data to the POIs (step **610**). The GetStreamItem response is then further relayed to the AR client in the UE (step **612**) and displayed by a GUI as a list of POI items.

In one embodiment, the AR client may comprise an refresh function configured to dynamically update the list of POI items as a function of location. Hence, after a user has executed as search as described with reference to **Fig.6** on the basis of the geo-coordinates of the UE, the most popular POIs are displayed to the user as a ranked list of POI items. When the user moves to a new position, the refresh function in the AR client may be triggered to send a GetStreamItems message to the layer proxy in order to receive a GetStreamIntems response comprising a new list of ranked POIs associated with the new location of the user, which may be presented to the user. Hence, when moving the refresh function in the AR client may receive a "stream" of POI items, which are used by the AR client to constantly update the ranked POI item list.

**Fig. 7** depicts an exemplary GUI **700** for use with an AR service provisioning system according to one embodiment of the invention. In particular, **Fig.7** depicts a GUI for use in the search mode, wherein the user activates the POI search function in the AR client, sends a search query to the POI search engine and receives in response a number of POIs in a ranked order. The GUI may comprise a list window **702** for displaying a ranked list of selectable POI items **704a-704e,** wherein each POI item may display information (i.e. metadata) associated with the POI, e.g. an icon associated with the layer or POI **706,** the name of the POI **708** and the layer **710** and the distance between the UE and the POI **712.**

Further, the GUI may comprise a compass window **714** for relating POIs in the list window to the direction in which a specific POI is located relative to the user. Further, in one embodiment, POI icons **716** associated with POIs, which are visible in the list window, are displayed in foreground of the compass window in accordance with their directional position. The number of search results may be such that not all POI items may be displayed in the first window. In that case, POIs which are not displayed in the first window, may be represented by graphical elements, which are displayed in the background of the compass window in such a way that their presence does not disturbed the visualization of the icons displayed on the foreground of the second window. In the example given in **Fig.7****,** the graphical elements representing POIs, which are not visible in the list window, are represented as small discs in the background of the compass window. This way, the user may directly see that the list window does not display all search results. Preferably, the graphical elements in the background of the second window are of smaller size than the icons on the foreground and displayed in a slightly transparent manner.

A user may scroll the list downward in order to access the lower ranked POIs. Each time when during scrolling a new POI item is displayed in the list window, its associated graphical element in the background of the compass window is changed to its POI icon displayed in the foreground of the compass window. Similarly, when during scrolling a POI item is not visible anymore in the list window, its associated POI icon displayed in the foreground of the compass window is changed to a graphic element displayed in the background of the compass window. Hence, during the scrolling only the POI items visible in the first window are displayed as POI icons in the foreground of the second window. As will become more apparent hereunder, this way of displaying the search results may allow easy selection of a POI from the search results.

A linear compass scale **718** in a compass window representing the cardinal directions allows a user to relate a direction to the POI icons in the foreground. The compass window may further comprise a fixed pointer **720** for indicating in which direction the user has pointed its mobile device. When the user points its mobile device towards another direction, the compass scale and the POI icons will linearly shift either to the left or to the right direction in the compass window in accordance with changed pointing direction. Hence, by changing the pointing direction **722** of the mobile device, a user may move a POI icon displayed in the foreground towards the pointer. When the pointer in the compass window coincides with a POI icon displayed in the foreground, the user is pointing its mobile device directly towards the POI. In one embodiment, it that case the AR client may highlight the associated POI item in the first window. Using both pointing direction in combination with a list window and a compass window may provide easy navigation and selection through the search results.

The user may also decide to view the search results in the AR view. Selection and displaying in the AR view is depicted in more detail in **Fig.8****.** After having viewed the search results in the list view as depicted in **Fig.7****,** the user may change the mobile device **802** from the horizontal list view position **804** into a position for the camera view **806** wherein the lens **808** of the camera is pointed towards the a number of POIs and wherein the surface of the display **808** is turned towards the user **810** and substantially perpendicular with respect to the earth's surface **812.** Moving the mobile device from the list view position to the camera view position may trigger a tilt sensor, e.g. an accelerometer, in the mobile device, which signals the AR client to switch over to a AR camera view GUI.

In the AR view the POIs may be represented by a number of graphical elements 814a-814f. In one embodiment, the highly ranked POIs 814a-814c may be represented using an POI icon in a similar was as described in Fig. 7. Further, in one embodiment the most popular POI 814a in the POI camera view may have an associated window 816 allowing displaying a limited number of metadata in a similar was as described with reference to Fig. 7. Lower ranked POIs 814d-814f, e.g. POIs not visible in the ranked listing of Fig. 7, may be displayed by a simple icon such that a user may distinguish between the rankings. In a further embodiment, the ranking associated with the POIs may be visualized by the size of the POI icon and/or the color.

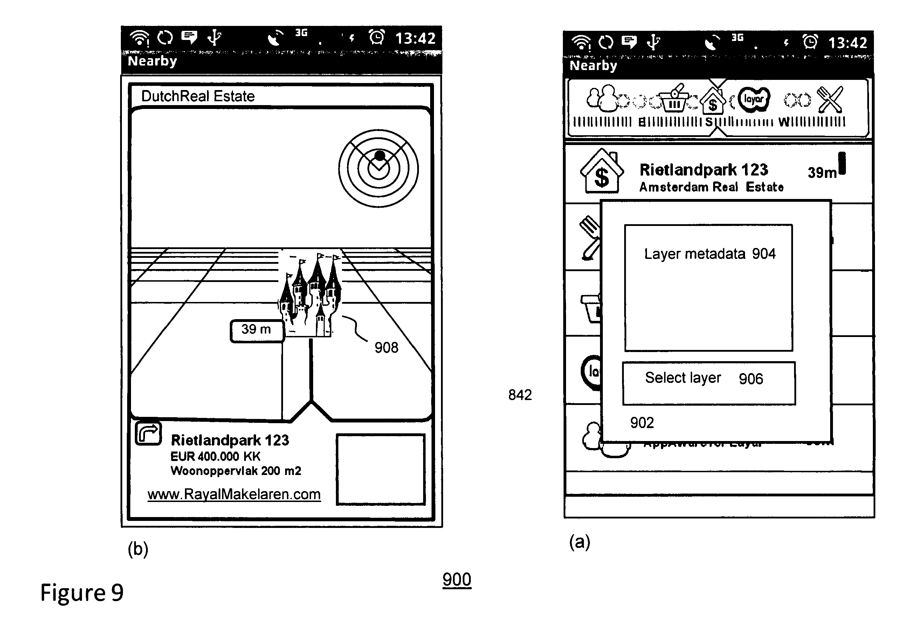

Fig. 9 depicts a further GUI for use with an AR service provisioning system according to yet another embodiment of the invention. In this embodiment, in the list view (Fig. 9(a)) the user may select a POI item. Upon selection the user is presented with a POI detail page 902 comprising metadata 904 associated with the POI (e.g. type of POI, possible interactions, content of a POI, etc.) and the layer the POI belongs to. Further, the POI detail page may comprise a selectable link 906 to the layer comprising the POI. By selecting the link a user may open the layer directly from here.

When the user opens the layer using the selectable link, the AR client switches to AR view as depicted in Fig. 9(b) and initiates a GetPOI request via the layer proxy to the content provider associated with the layer. However, in contrast with a "normal" GetPOI request, in this case the request also comprises the POI_ID of the POI used to find the layer, thereby providing the content provider with an indication that this particular POI was selected on the basis of a search query. Knowing that a user is interested in this particular selected POI, the content provider may added extra information to the POI, change the POI (e.g. its icon 908) and/or only return that particular POI. For example, in Fig. 9(b) in which the same layer is selected as in Fig. 2(b), in response to the GetPOI comprising the POI_ID, the content provider removed all other POIs and used a special graphical element for displaying the POI in the AR view.

When the AR client receives the response, it will lock the original POI in the view making it easy for the user to find it back. Also the content provider may choose to change the POI in a special way, knowing that's the POI the user is interested in (maybe only returning that one poi and not the others in the layer).

In a yet a further embodiment, in the list view as depicted in Fig. 7 the user may use the pointer in the compass window to select a POI item and switch to another window without tapping a selectable link at all. For example, when the pointer coincides with the POI icon of the real estate property, the POI item in the first window may be highlighted indicating that the user is pointing directly towards the POI and the AR client is "locked" onto the POI. Thereafter, the user may tilt the mobile in the camera view position in order to trigger the digital tilt sensor providing the AR client a signal to select that the layer associated with the selected POI thereby directly executing a GetPOI request comprising a POI_ID and switching over to the AR camera view wherein the POI and the selected layer is displayed in a similar way as described with reference to Fig. 9(b).

It is to be understood that any feature described in relation to any one embodiment may be used alone, or in combination with other features described, and may also be used in combination with one or more features of any other of the embodiments, or any combination of any other of the embodiments. One embodiment of the invention may be implemented as a program product for use with a computer system. The program(s) of the program product define functions of the embodiments (including the methods described herein) and can be contained on a variety of computer-readable storage media. Illustrative computer-readable storage media include, but are not limited to: (i) non-writable storage media (e.g., read-only memory devices within a computer such as CD-ROM disks readable by a CD-ROM drive, flash memory, ROM chips or any type of solid-state non-volatile semiconductor memory) on which information is permanently stored; and (ii) writable storage media (e.g., floppy disks within a diskette drive or hard-disk drive or any type of solid-state random-access semiconductor memory) on which alterable information is stored. Moreover, the invention is not limited to the embodiments described above, which may be varied within the scope of the accompanying claims without departing from the scope of the invention.

## Claims

1. Method for generating ranked points of interests for use in an augmented reality service provisioning system, the method comprising:
receiving feedback information comprising information on users interaction associated with one or more points of interest displayed as one or more selectable graphical indicators on a screen of a mobile device and assigning popularity scores to points of interests identified in said feedback information on the basis of said user interactions;
associating a point of interest in a recording list, comprising points of interests sent to one or more mobile devices in said augmented reality service provisioning system, with a popularity score assigned to points of interests identified in said feedback information; and,
storing said point of interest and said popularity score in a points of interest database.

2. Method according to claim 1, said method further comprising:
associating said points of interest in said recording list with distance interaction information comprised in said feedback information, said distance interaction information determining the distance between a mobile device and the point of interest at the moment of a user interaction,
storing said distance interaction information associated with said point of interest in said points of interest database.

3. Method according to claims 1 or 2, wherein a points of interest is associated with a data structure comprising at least a unique identifier, location information and metadata for allowing a mobile device to display a point of interest as selectable graphical indicator on a graphical user interface.

4. Method according to any of claim 1-3, said method comprising:
storing one or more points of interest identified in said feedback information and their associated popularity scores in a popularity table;
determining on the basis of the points of interest and the popularity scores in said popularity table the popularity score of a point of interest in said recording list.

5. Method according to any of claims 1-4, wherein said feedback list is generated by storing events associated with a user interacting with a point of interest displayed on a screen of a mobile device.

6. Method according to any of claims 1-5, wherein said popularity score is determined on the basis of a popularity algorithm using user interaction information as an input parameter.

7. Method according to any of claims 1-6, said method further comprising:
receiving a request from a mobile device for points of interests associated with a predetermined graphical overlay;
on the basis of a resource database, relaying said request to a server comprising said points of interests;
receiving one or more points of interest associated with said graphical overlay;
relaying said points of interests to said mobile a points of interest recorder for storing said points of interest in said recording list.

8. Method according to any of claims 1-7, said method further comprising:
indexing the information in the points of interest database using an indexing scheme.

9. Method for searching in an indexed list of points of interests, wherein each point of interest is at least associated with location information and ranking information, said ranking information comprising at least a popularity score determined on the basis of information on user interactions associated with one or more points of interest displayed as selectable graphical indicators on a screen of a mobile device, the method comprising:
receiving a search request from a mobile device, said request at least comprising location information associated with said mobile device;
selecting points of interest in said indexed list on the basis of said location information;
ranking said selected points of interest on the basis of said ranking information;
sending said ranked points of interest to said mobile device.

10. Method according to claim 9, wherein said ranking information further comprises an average distance interaction of a point of interest, the distance between a point of interest and/or the location information in said search request.

11. Method according to claims 9 or 10, wherein if said mobile device has moved over a predetermined distance, sending a subsequent search request for retrieving a list of ranked points of interests on the basis of the new location information of said mobile device.

12. A ranking system for generating ranked points of interests for use in an augmented reality service provisioning system, said points of interests allowing a mobile device to display selectable graphical indicators on a graphical user interface, said system comprising:
a feedback recorder for receiving feedback information generated by a feedback function executed on a mobile device, said feedback information comprising information on users interactions associated with one or more points of interest displayed as selectable graphical indicators on a screen of a mobile device;
a points of interest recorder for generating recoding list comprising points of interests which are sent to sent to one or more mobile devices in said augmented reality service provisioning system;
a processor executing a popularity algorithm for assigning popularity scores to points of interests identified in said feedback information on the basis of said user interactions; and,
a processor for associating points of interest in said recording list with a popularity score assigned to points of interests identified in said feedback information.

13. A client for use with a ranking system according to claim 12, said client being configured to:
send a request for points of interest to a content server in a network;
to receive from said content server one or more points of interest and to display said points of interests as location-dependent selectable graphical indicators in a graphical overlay on the graphical user interface of a mobile device;
to generate a feedback information of user interactions associated with one or more points of interests displayed on said graphical user interface of said mobile device; and,
to send said feedback information, preferably periodically, to said ranking system.

14. Graphical user interface for displaying search results comprising ranked points of interests on a mobile device comprising a digital compass, said graphical user interface comprising:
a first window for displaying a scrollable list of selectable items, each item being associated with a ranked point of interest and identified by a predetermined graphical indicator, the size of said first window allowing displaying of a predetermined part of said of items;
a second window for displaying a linear movable compass scale and a first set of graphical elements representing a point of interest associated with displayed items in said first window and each graphical element being presented along said compass scale in accordance with the direction of said points of interest relative to the mobile device; said second window further comprising:
a fixed direction pointer wherein if the mobile device is pointed in a certain direction, the linear compass scale and the graphical elements are moved by a signal of the digital compass in the mobile device such that when the fixed direction pointer coincides with a graphical element, the mobile device is pointing towards the location of the point of interest associated with said graphical element.

15. A computer program product, the computer program product comprising software code portions configured for, when run a computer, executing the method steps according to any of claims 1-8 or 9-11.
